# FASCICULE DE BREVET EUROPEEN

(11) **EP 4 444 515 B1**
(45) Date de publication et mention de la délivrance du brevet: **04.02.2026**
(21) Numéro de dépôt: 22834863.7
(22) Date de dépôt: 06.12.2022
(51) Int. Cl.: B25J 11/00, B25J 15/00, B25J 19/02

(54) **DISPOSITIF MULTI-TÂCHE COMPRENANT UNE CAMÉRA ET UNE BROCHE UNIQUE APTE À PLACER LA CAMÉRA DANS UNE POSITION DE MISE AU POINT**
MULTITASKING-GERÄT, UMFASSEND EINE KAMERA UND EINEN EINZELNEN STIFT, DER ANGEPASST IST DIE KAMERA IN EINE FOKUSPOSITION ZU BRINGEN
MULTI-TASKING DEVICE COMPRISING A CAMERA AND A SINGLE SPINDLE ADAPTED TO PLACE THE CAMERA IN A FOCUS POSITION

(30) Priorité: 09.12.2021 FR 2113238
(43) Date de publication de la demande: 16.10.2024
(73) Titulaire: Seti-Tec, 77090 Collégien (FR)
(72) Inventeur: PEREIRA SANTO, Sebastien, 2820-568 CHARNECA DA CAPARICA (PT)
(74) Mandataire: Vidon Brevets & Stratégie
(86) Numéro de dépôt international: PCT/EP2022/084657
(87) Numéro de publication internationale: WO 2023/104826

(56) Documents cités:
- WO-A1-2005/072917
- WO-A1-2020/212631
- CN-A- 113 601 493
- US-A- 5 194 791
- US-B2- 9 919 428

## Description

### 1. Domaine de l'invention

Le domaine de l'invention est celui de la conception et de la réalisation de dispositifs mis en œuvre dans l'industrie pour réaliser des tâches diverses sur une structure à travailler, en particulier pour l'industrie aéronautique.

### 2. Art antérieur

De nombreux dispositifs sont couramment mis en œuvre pour réaliser différentes tâches ou opérations sur une structure à travailler. Il peut par exemple s'agir d'un perçage, d'un fraisurage, de la pose d'une fixation temporaire, de l'enduction d'un rivet avec du mastic puis de la pose de ce rivet dans un trou percé dans structure ou toute autre opération.

Des dispositifs mobiles ont été développés pour permettre de réaliser des tâches sur des structures complexes comme par exemple des avions.

Au rang de ces dispositifs figurent notamment ceux du type comprenant un outillage placé à l'extrémité d'un bras robot pour être manipulé et déplacé par rapport à la structure à travailler, le dispositif comprenant des moyens de solidarisation, comme par exemple des ventouses, permettant de rendre l'outillage solidaire de la structure à travailler afin de lui faire reprendre les efforts dus à l'accomplissement de la tâche pour soulager le bras robot.

Certains dispositifs de ce type, appelé dispositif multi-tâche, sont susceptibles d'embarquer plusieurs modules fonctionnels chacun dédié à la réalisation d'une tâche particulière.

Un tel dispositif comprend une seule broche de sortie susceptible d'être entrainée en rotation et/ou en translation suivant un même axe via des moyens moteur et de contrôle.

Cette broche unique peut être amenée à coopérer alternativement avec les différents modules embarqués de sorte à permettre la réalisation d'une tâche à laquelle ils sont dédiés.

Les demandes de brevets PCT/EP2020/069158, PCT/EP2020/069159, PCT/EP2020/069160, PCT/EP2020/069161, PCT/EP2020/069162, déposées par la Deanderesse, décrivent des dispositifs multi-tâche.

US 9 919 428 B2 divulgue un dispositif multi-tâches comprenant: un bâti; des moyens de fixation dudit bâti à des moyens de manutention motorisés aptes a déplacer au moins en partie ledit dispositif dans l'espace par rapport a une structure à travailler; des moyens de positionnement dudit dispositif à ladite structure à travailler, la distance entre ledit dispositif et la surface de ladite structure à travailler pouvant varier entre une position d'approche et une position d'accostage, une unique broche d'entraînement mobile en translation et une caméra.

Pour pouvoir réaliser les différentes opérations à des endroits précis de la structure à travailler, il est nécessaire de pouvoir repérer la position dans l'espace du dispositif par rapport à la structure, et notamment l'orthogonalité de l'axe de la broche de sortie par rapport à la surface de la structure à travailler ainsi que la localisation de l'intersection de l'axe de la broche avec la surface de la structure à travailler vis-à-vis d'un repère sur cette surface, et d'ajuster ces critères géométriques vis-à-vis de prescription de production.

Il peut également être nécessaire de disposer de moyens permettant, après qu'une opération a été réalisée, d'en contrôler la qualité.

La présente invention vise notamment à améliorer les techniques d'ajustement de la position du dispositif multi-tâche vis-à-vis de la structure à travailler et/ou de permettre le contrôle d'une opération après qu'elle a été réalisée.

### 3. Objectifs de l'invention

L'invention a notamment pour objectif d'apporter une solution efficace à au moins certains de ces différents problèmes.

En particulier, selon au moins un mode de réalisation, un objectif de l'invention est de fournir une technique permettant de repérer et d'ajuster facilement la position relative d'un dispositif multi-tâche par rapport à la surface d'une structure à travailler.

Notamment, l'invention a pour objectif, selon au moins un mode de réalisation, de fournir une telle technique qui permette de contrôler et d'ajuster l'orthogonalité de la broche par rapport à la surface de la structure à travailler.

Notamment, l'invention a pour objectif, selon au moins un mode de réalisation, de foumir une telle technique qui permette de contrôler et d'ajuster la localisation de l'intersection de l'axe de la broche avec la surface de la structure à travailler vis-à-vis d'un repère présent sur cette surface.

Notamment, l'invention a pour objectif, selon au moins un mode de réalisation, de fournir une telle technique qui permette de contrôler la qualité d'une opération réalisée.

Notamment, l'invention a pour objectif, selon au moins un mode de réalisation, de fournir une telle technique qui puisse être mise en œuvre de manière compacte.

Un autre objectif de l'invention est, selon au moins un mode de réalisation, de fournir une telle technique qui soit fiable et/ou robuste.

### 4. Présentation de l'invention

Pour ceci, l'invention propose un dispositif multi-tâches comprenant :
- un bâti ;
- des moyens de fixation dudit bâti à des moyens de manutention motorisés aptes à déplacer au moins en partie ledit dispositif dans l'espace par rapport à une structure à travailler ;
- des moyens de positionnement et/ou solidarisation dudit dispositif à ladite structure à travailler, la distance entre ledit dispositif et la surface de ladite structure à travailler pouvant varier entre une position d'approche et une position d'accostage ;
- au moins deux modules fonctionnels, chacun desdits modules fonctionnels comprenant au moins un organe mobile apte à permettre la réalisation d'une tâche donnée sur ladite structure à travailler ;
- une unique broche d'entrainement mobile en rotation et/ou en translation suivant un même axe et apte à coopérer individuellement avec lesdits organes mobiles pour les animer d'un mouvement de rotation et/ou de translation permettant la réalisation de leur tâche donnée ;
- une caméra ayant une profondeur de champ, ladite caméra étant montée mobile entre au moins :
   - une position de rangement dans laquelle elle ne s'étend pas dans l'axe de ladite broche unique ;
   - une position intermédiaire dans laquelle elle s'étend dans l'axe de ladite broche unique ;
ladite broche étant apte à agir sur ladite caméra pour la déplacer dans au moins une position de mise au point dans laquelle ladite surface de ladite structure à travailler se trouve dans la profondeur de champ de ladite caméra.

Ainsi, selon l'invention, la broche unique d'un dispositif multi-tâche embarquant une caméra peut être utilisée pour déplacer la caméra afin de faire la mise au point.

L'invention permet ainsi d'utiliser une caméra sans autofocus par exemple pour repérer un dispositif multi-tâche dans m'espace par rapport à une structure à travailler et/ou pour contrôler la qualité d'une tâche réalisée.

La technologie sans autofocus est nettement plus robuste et est peu encombrante. La mise en œuvre d'une caméra de ce type permet ainsi de procurer un dispositif multi-tâche, doté d'une caméra, particulièrement robuste et compact.

Selon une variante possible, un dispositif selon l'invention comprend des moyens d'appareillage de ladite broche unique avec ladite caméra, lesdits moyens d'appareillage permettant de lier en translation ladite broche unique avec ladite caméra de manière telle que ladite caméra est susceptible d'être déplacée entre ladite position intermédiaire et ladite au moins une position de mise au point le long dudit axe.

De tels moyens d'appareillage peuvent être mis en œuvre pour réaliser une étape d'appareillage.

Selon une variante possible, ladite caméra est montée mobile en translation selon un axe orthogonal audit axe de déplacement de ladite broche unique entre ladite position de rangement et ladite position intermédiaire.

Selon une variante possible, un dispositif multi-tâches selon l'invention comprend des moyens de guidage et d'entrainement en translation de ladite caméra entre ses positions de rangement et intermédiaire.

De tels moyens peuvent être utilisés pour réaliser une étape de guidage et d'entrainement en translation de ladite caméra entre ses positions de rangement et intermédiaire.

Selon une variante possible, lesdits moyens de guidage en translation comprennent une platine porte-caméra liée au bâti par une liaison glissière d'axe orthogonal à l'axe de ladite broche unique.

Ceci permet de déplacer simplement mais avec précision et robustesse la caméra.

Selon une caractéristique possible, ladite platine est traversée par une lumière permettant le passage de ladite broche unique lorsque la caméra est en position de rangement.

Selon une caractéristique possible, un dispositif multi-tâches selon l'invention comprend des moyens de contrôle de ladite caméra et d'analyse des images captées par ladite caméra.

De tels moyens peuvent être utilisés pour réaliser une étape contrôle de ladite caméra et une étape d'analyse des images captées par ladite caméra.

### Détection déplacement non souhaité du dispositif

Selon une variante possible, lesdits moyens de contrôle et d'analyse sont aptes à détecter, notamment dans une étape de détection, lorsqu'un dispositif selon l'invention est utilisé pour mettre en œuvre un procédé de réalisation d'au moins une tâche, un déplacement non souhaité dudit dispositif par rapport à ladite surface lorsque ledit dispositif est en cours de solidarisation à ladite surface par lesdits moyens de solidarisation.

Selon une variante possible, le déplacement non souhaité dudit dispositif par rapport à ladite surface susceptible d'être détecté par lesdits moyens de contrôle et d'analyse est un déplacement essentiellement parallèle à ladite surface.

Selon une variante possible, lesdits moyens de contrôle et d'analyse sont aptes à repérer des points singuliers à la surface de ladite structure à travailler et à surveiller leur déplacement dans des images successives captées par ladite caméra et d'en déduire un déplacement non souhaité dudit dispositif par rapport à ladite surface de ladite structure à travailler.

Ceci peut-être mis en œuvre pour la réalisation d'une étape de repérage des points singuliers à la surface de ladite structure à travailler et une étape de surveillance de leur déplacement dans des images successives captées par ladite caméra et une étape de déduction d'un déplacement non souhaité dudit dispositif par rapport à ladite surface de ladite structure à travailler.

### Détection de la position dudit dispositif multitâche vis-à-vis desdits éléments de repérage

Selon une caractéristique possible lesdits moyens de contrôle et d'analyse sont aptes à détecter des éléments de repérage ménagés sur ladite surface et à déduire, de leur position dans des images captées par ladite caméra, la position dudit dispositif multitâche vis-à-vis desdits éléments de repérage.

Ceci peut-être mis en œuvre pour la réalisation d'une étape de détection des éléments de repérage ménagés sur ladite surface et une étape de déduction, de leur position dans des images captées par ladite caméra, la position dudit dispositif multitâche vis-à-vis desdits éléments de repérage.

Selon une caractéristique possible, lesdits modules fonctionnels appartiennent au groupe comprenant au moins :
- les modules de perçage ;
- les modules de pose de rivets enduit ou non de mastic ;
- les modules de pose de fixations temporaires.

### Control de l'aspect d'un trou ou d'une fraisure

Selon une caractéristique possible, lesdits moyens de contrôle et d'analyse sont aptes à contrôler l'aspect d'un trou ou d'une fraisure réalisée au moyen d'un module de perçage et à vérifier sa conformité à des critères visuels de qualité préétablis.

Ceci peut-être mis en œuvre pour la réalisation d'une étape de contrôle de l'aspect d'un trou ou d'une fraisure.

### Contrôle dépose de mastic

Selon une caractéristique possible, lesdits moyens de contrôle et d'analyse sont aptes à contrôler l'aspect d'une corolle de mastic débordant latéralement de la tête d'un rivet posé au moyen d'un module de pose de rivet et à vérifier sa bonne continuité autour de la tête du rivet attestant de sa conformité.

Ceci peut-être mis en œuvre pour la réalisation d'une étape de contrôle d'une corolle de mastic débordant latéralement de la tête d'un rivet fraisure.

### Projection sur ladite surface d'un motif prédéterminé

Selon une variante possible, un dispositif multi-tâches selon l'invention comprend des moyens de projection sur ladite surface d'un motif prédéterminé, lesdits moyens de contrôle et d'analyse étant aptes à capter et analyser ledit motif et à en déduire un défaut de normalité de ladite broche unique par rapport à ladite surface.

Ceci peut-être mis en œuvre pour la réalisation d'une étape de projection sur ladite surface d'un motif prédéterminé et d'une étape de contrôle de la normalité de ladite broche unique par rapport à ladite surface.

Selon une variante possible, un dispositif multi-tâches selon l'invention comprend des moyens de solidarisation dudit dispositif à des moyens de manutention motorisés aptes à déplacer au moins en partie ledit dispositif multitâche dans l'espace par rapport à ladite surface entre au moins une position d'approche dans laquelle ledit dispositif est distant de ladite surface une position d'accostage dans laquelle ledit dispositif est en applique contre ladite surface.

Ceci peut être utilisé pour réaliser une étape de déplacement dudit dispositif multitâche dans l'espace par rapport à ladite surface entre au moins une position d'approche dans laquelle ledit dispositif est distant de ladite surface une position d'accostage dans laquelle ledit dispositif est en applique contre ladite surface.

Selon une variante possible, lesdits moyens de contrôle et d'analyse sont aptes, lorsque ledit dispositif est dans ladite position d'accostage, à contrôler l'aspect d'un trou ou d'une fraisure ou l'aspect d'une corolle de mastic débordant latéralement de la tête d'un rivet ou le déplacement non souhaité dudit dispositif par rapport à ladite surface.

Selon une caractéristique possible, lesdits moyens de contrôle et d'analyse sont aptes, lorsque ledit dispositif est dans ladite position d'approche, à détecter des éléments de repérage ménagés sur ladite surface et à déduire de leur position dans des image captées par ladite caméra, la position du dispositif multitâche vis-à-vis de ces éléments de repérage ou à détecter un défaut de normalité de ladite broche unique par rapport à ladite surface.

L'invention concerne également un procédé de réalisation d'une tâche au moyen d'un dispositif multi-tâche selon l'une quelconque des variantes ci-dessus.

Un tel procédé comprend une étape de déplacement de ladite caméra, au moyen de ladite broche, dans au moins une position de mise au point dans laquelle ladite surface de ladite structure à travailler se trouve dans la profondeur champ de ladite caméra.

### 5. Description des figures

D'autres caractéristiques et avantages de l'invention apparaîtront à la lecture de la description suivante de modes de réalisation particuliers, donnée à titre de simple exemple illustratif et non limitatif, et des dessins annexés parmi lesquels :
[Fig 1] la figure 1 illustre une vue en perspective d'un exemple de dispositif multitâche selon l'invention ;
[Fig 2] la figure 2 illustre une vue partielle en coupe suivant un plan passant par l'axe de la broche du dispositif de la figure 1 avec la caméra en position de rangement ;
[Fig 3] la figure 3 illustre une vue partielle en coupe suivant un plan passant par l'axe de la broche du dispositif de la figure 1 avec la caméra en position intermédiaire ;
[Fig 4] la figure 4 illustre une vue partielle en coupe suivant un plan orthogonal à l'axe de la broche du dispositif de la figure 1 avec la caméra en position de rangement ;
[Fig 5] la figure 5 illustre une vue partielle en perspective du dispositif de la figure 1.

### 6. Description de modes de réalisation particuliers

### 6.1. Architecture

### Moyens de fixation à des moyens de manutention

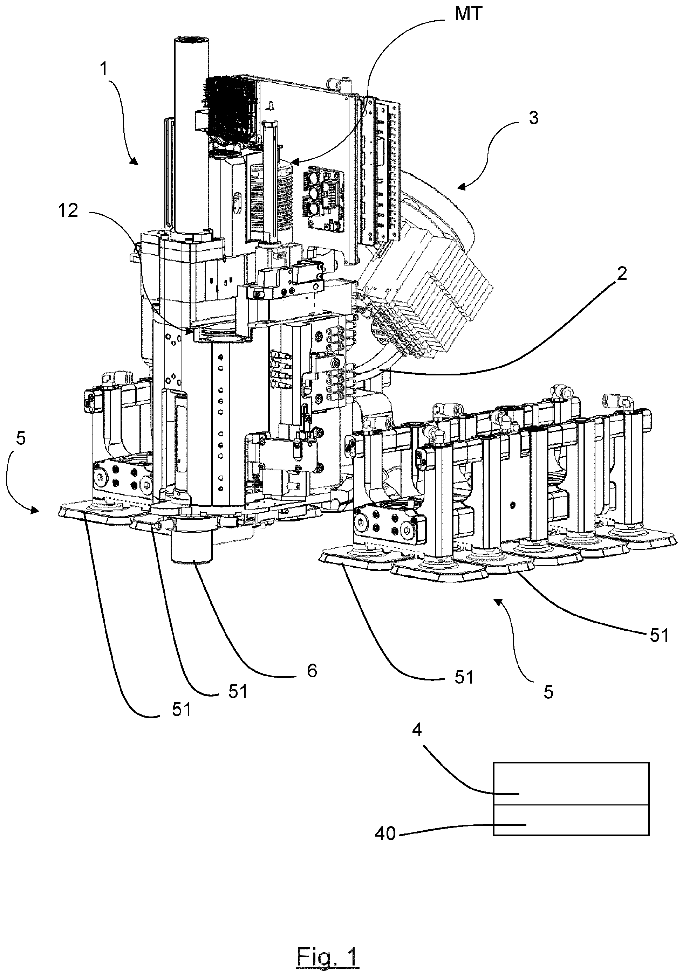

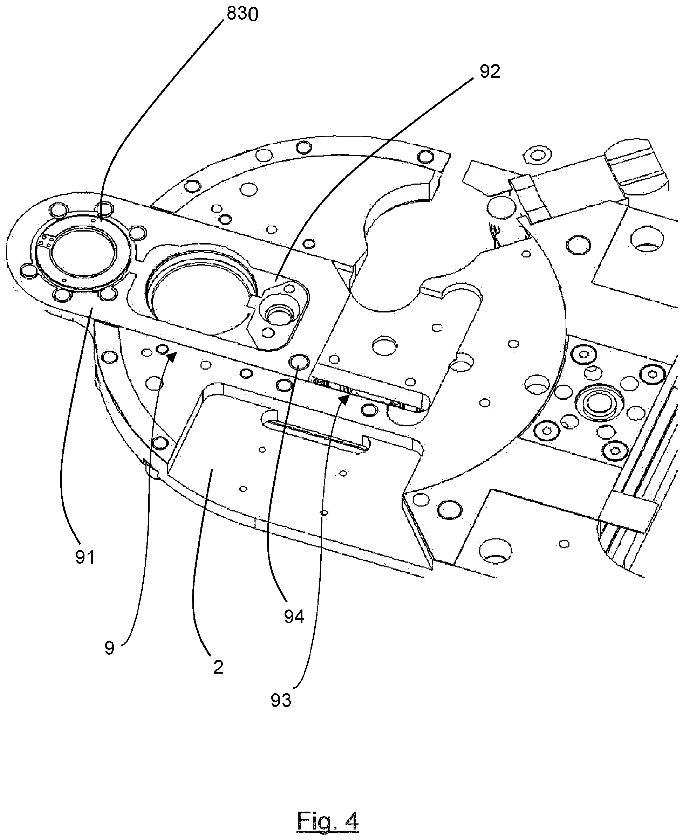

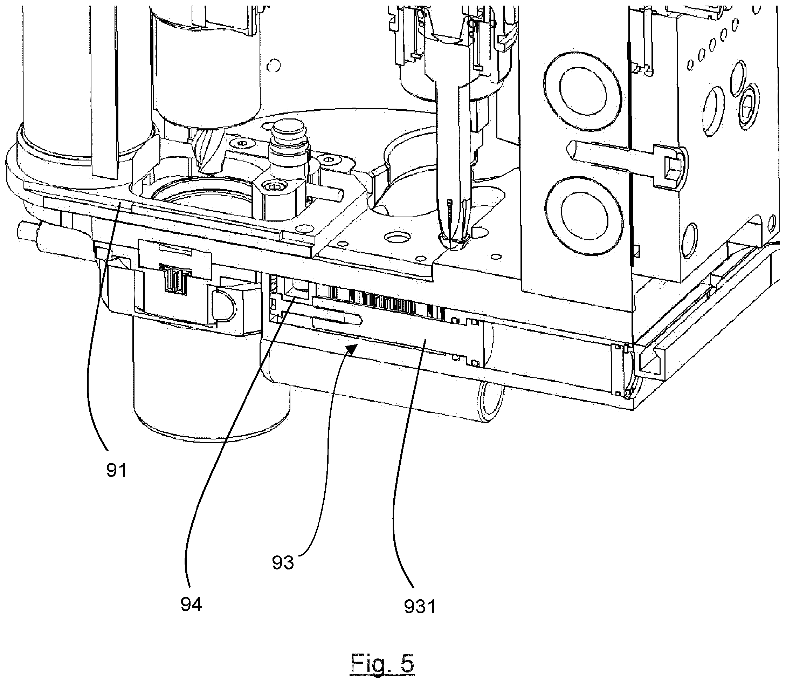

On décrit, en relation avec les figures 1 à 5 un exemple d'un dispositif multi-tâche selon l'invention.

Ainsi que cela est représenté sur ces figures, un tel dispositif multi-tâche 1 comprend un bâti 2.

Ce bâti 2 est équipé de moyens de fixation 3 à un dispositif de manutention motorisés (non représenté) auquel il est destiné à être solidarisé de manière à pouvoir être déplacé au moins en partie par rapport à une structure à travailler (non représentée).

Ces moyens de manutention motorisés appartiennent au groupe comprenant notamment :
- les bras robot ;
- les robots marcheurs par exemple selon le principe décrit dans le document de brevet FR-B1-2 809 034 ;
- les grilles numériques par exemple selon le principe décrit dans le document de brevet WOA-2-200349899.

De tels moyens de fixation 3 sont connus en soit et ne sont donc pas décrits. Ils peuvent par exemple comprendre un système de type à platine et boulons, des moyens de solidarisation rapides de type collier, un système à clamp ou à came....

Les moyens de manutention motorisés sont aptes à déplacer au moins en partie (notamment lorsque le contrôleur est fixe) le dispositif multitâche dans l'espace par rapport à la surface de la structure à travailler entre au moins une position d'approche dans laquelle le dispositif est proche de la surface tout en étant distante de celle-ci et une position d'accostage dans laquelle le dispositif est en applique contre la surface, par exemple en vue d'y être solidarisé si des moyens de solidarisation sont mis en œuvre. Ils peuvent également placer le dispositif multitâche dans une position de stockage lorsqu'il n'est pas utilisé pour réaliser une opération.

### Broche unique de sortie

Le dispositif comprend une unique broche d'entrainement 7 mobile en rotation et/ou en translation suivant un même axe.

Le dispositif comprend également des moyens moteurs et de transmission MT pour permettre d'animer la broche d'un mouvement de rotation et/ou de translation suivant son axe longitudinal. Ces moyens moteurs et de transmission sont connus en soit et ne sont pas décrits plus en détail ici.

### Contrôleur

Le dispositif comprend classiquement un contrôleur 4 comprenant l'électronique de contrôle et de puissance permettant de contrôler et d'alimenter en énergie le dispositif.

Ce contrôleur 4 est préférentiellement contenu dans un coffret distant du bâti 2 et entreposé de manière fixe sur site.

Le contrôleur 4, ou à tout le moins certains de ses composants, pourraient néanmoins être embarqués sur le bâti 2.

### Moyens de solldarisation à une structure à travailler (optionnels)

Le dispositif peut optionnellement, mais de manière préférentielle, comprendre des moyens de solidarisation 5 à la structure à travailler.

Ces moyens de solidarisation peuvent être de différents types.

Ils peuvent par exemple comprendre des ventouses 51 solidaires du bâti 2 et aptes à être reliées à des moyens de mise sous vide comme par exemple une pompe à vide pour améliorer la solidarisation à la surface de la structure à travailler. Ces ventouses peuvent être réunies par groupes pour former des pads à ventouses.

Lorsqu'aucun moyen de solidarisation à la structure à travailler n'est mis en œuvre, le dispositif de manutention peut constituer non seulement un moyen de positionnement du bâti par rapport à la structure à travailler mais également un moyen d'immobilisation de celui-ci en position par rapport à la structure à travailler.

### Élément presseur (optionnel)

Le dispositif peut optionnellement comprendre un élément presseur 6 de forme tubulaire monté mobile en translation par rapport au bâti 2 selon l'axe de déplacement de la broche 51 et dans le prolongement de celle-ci.

L'élément presseur est un tube creux pour permettre le passage de la broche et de la caméra.

Un tel élément presseur 6 peut par exemple être utilisé au cours d'une opération de perçage pour exercer un effort de compression sur la structure à percer, notamment pour assurer le contact entre les plaques d'un empilement et éviter la formation de bavures entre ces plaques lors du perçage.

### Modules fonctionnels

Le dispositif est susceptible d'embarquer une pluralité de modules fonctionnels MF.

Chacun de ces modules fonctionnels MF permet de réaliser une tâche particulière comme par exemple une opération de perçage et/ou de fraisurage, une opération de pose de rivets, une opération de pose de fixation temporaire (par exemple d'agrafe), une opération de dépose (ou d'enduction) sur un élément de fixation (un rivet ou une vis) d'un cordon de mastic d'étanchéité. D'autres fonctions pourraient être envisagées telles que du vissage.

Les modules fonctionnels appartiennent par exemple au groupe comprenant au moins :
- les modules de perçage et/ou fraisurage ;
- les modules de pose de rivets enduit ou non de mastic ;
- les modules de pose de fixations temporaires.

Une fixation temporaire utilisée dans l'industrie aéronautique est un organe mécanique permettant de serrer au moins deux parois, l'une contre l'autre, dans le but de réaliser des opérations de production nécessaires à un assemblage définitif de ces parois, tel que des contreperçages ou de la pose de vis ou de rivets.

Par définition, ces fixations temporaires sont enlevées au fur et à mesure que les vis ou rivets assurent leur fonction d'assemblage des parois.

Les fixations temporaires sont placées dans des trous réalisés dans les parois après le positionnement relatif initial de ces parois.

Les fixations temporaires ne nécessitent d'avoir accès que d'un côté de l'une des parois.

De tels modules fonctionnels sont notamment décrits dans les documents de brevet PCT/EP2020/069158, PCT/EP2020/069159, PCT/EP2020/069160, PCT/EP2020/069161, PCT/EP2020/069162, déposées par la Demanderesse.

Le dispositif comprend des moyens 12 permettant de mettre les différents modules embarqués dans l'alignement de la broche 7 pour réaliser une tâche. Ces moyens peuvent par exemple comprendre un carrousel, une cartouchière ou autre.

### Module fonctionnel de caméra

Le dispositif mutli-tâche comprend un module de caméra 8.

Le module de caméra 8 comprend un élément tubulaire externe 81 et un élément tubulaire interne 82 monté mobile en translation à l'intérieur de l'élément tubulaire externe 81. L'élément tubulaire interne 82 constitue un organe mobile du module de caméra.

L'élément tubulaire interne 82 présente une extrémité 821 orientée du côté de la broche 7 et une extrémité opposée 822 portant une caméra 83.

La caméra 83 est une caméra sans autofocus et ayant une profondeur de champ. Cette profondeur de champs est délimitée par deux plans de netteté parallèles et distants l'un de l'autre situés dans le prolongement de l'objectif de la caméra. Les images captées par la caméra d'objets situés entre ces deux plans de netteté sont nettes.

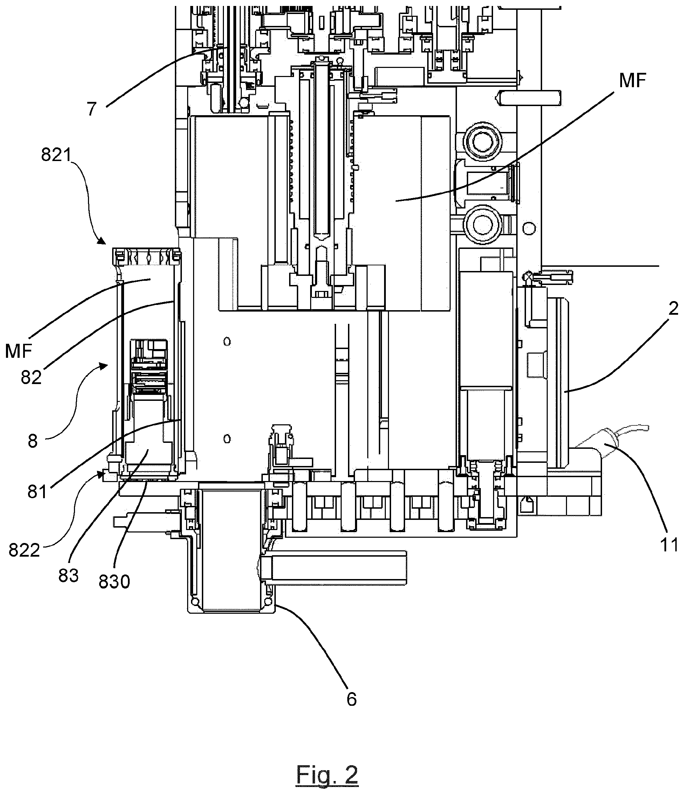

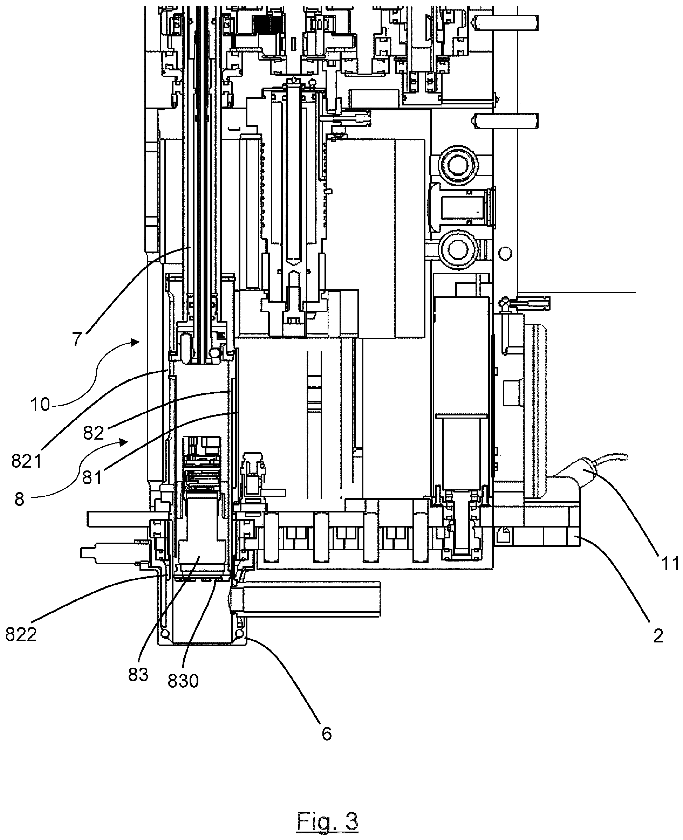

La caméra 83 est montée mobile entre au moins :
- une position de rangement (cf. figure 2) dans laquelle elle ne s'étend pas dans l'axe de la broche unique 7 ;
- une position de intermédiaire (cf. figure 3) dans laquelle elle s'étend dans l'axe de la broche unique 7.

Dans ce mode de réalisation, la caméra 83 est montée mobile en translation selon un axe orthogonal à l'axe de déplacement de la broche unique 7 entre la position de rangement et la position intermédiaire. Dans la position de rangement, la caméra se trouve alors décalée latéralement par rapport à l'axe de la broche.

Pour cela, le dispositif multi-tâches comprend des moyens de guidage et d'entrainement en translation 9 de la caméra 83 entre ses positions de rangement et intermédiaire.

Les moyens de guidage et d'entrainement en translation 9 de la caméra comprennent une platine porte-caméra 91 liée au bâti 2 par une liaison glissière d'axe orthogonal à l'axe de la broche unique 7.

L'élément tubulaire externe 81 est lié par une liaison encastrement à la platine porte caméra 91.

La platine 91 est traversée par une lumière 92 permettant le passage de la broche unique 7 lorsque la caméra 83 est en position de rangement.

Les moyens de guidage et d'entrainement en translation 9 comprennent un actionneur. Dans ce mode de réalisation, l'actionneur est un vérin 93. La platine 91 est reliée par un axe 94 à l'extrémité de la tige 931 du vérin 93 qui peut être actionné pour déplacer dans un sens ou dans l'autre la platine. Ce vérin 93 permet ainsi de déplacer la caméra 83 entre ses positions de rangement et intermédiaire.

La caméra 83 est montée mobile en translation le long de l'axe de la broche 7 entre au moins :
- la position intermédiaire, et
- une position de mise au point dans laquelle la surface de la structure à travailler se trouve dans la profondeur de champ de la caméra.

La broche 7 est apte à agir sur la caméra 83 pour la déplacer entre ses positions intermédiaire et de mise au point. Pour cela, le dispositif comprend des moyens d'appareillage 10 pour lier en translation la broche 7 et la caméra 83 suivant l'axe de la broche.

L'élément tubulaire interne 82 présente une extrémité 821 orientée vers la broche 7. Cette extrémité 821 comprend des premiers moyens d'appareillage de forme complémentaire de deuxièmes moyens d'appareillage placés à l'extrémité de la broche 7. Ces moyens d'appareillage peuvent par exemple être du type expanseur à billes ou autres.

Ces premiers et deuxièmes moyens d'appareillage permettent de lier en translation la broche unique 7 l'élément tubulaire interne 82 de manière telle que la broche 7 puisse entrainer suivant son axe l'élément tubulaire interne 82 en translation dans l'élément tubulaire externe 81. Ce faisant, la broche déplace la caméra 83 portée par l'élément tubulaire interne 82.

De tels moyens d'appareillage sont notamment décrits dans les documents de brevet PCT/EP2020/069158, PCT/EP2020/069159, PCT/EP2020/069160, PCT/EP2020/069161, PCT/EP2020/069162, déposées par la Demanderesse.

L'extrémité de la caméra peut être cerclé d'un bandeau de LED 830.

### Moyens de contrôle de la caméra et d'analyse des images captées par la caméra

Le dispositif comprend des moyens 40 de contrôle de la caméra 83 et d'analyse des images captées par la caméra 83. De tels moyens de contrôle et d'analyse 40 sont connus en soi de l'homme du métier et ne sont donc pas décrits en détail. Dans le cadre de la présente invention, ces moyens sont néanmoins configurés pour remplir certaines fonctions qui sont décrites plus en détail par la suite.

### Détermination et contrôle de la position du dispositif par rapport à la structure à travailler, notamment de la bonne localisation de l'intersection de l'axe de la broche avec la surface vis-à-vis d'un repère sur la surface

Pour réaliser une tâche sur la structure à travailler, le dispositif multi-tâche doit être préalablement positionné par rapport à la structure à travailler à l'endroit précis où la tâche doit être réalisée.

La surface de la structure à travailler peut présenter des repères visuels, réalisés de manière à identifier des localisations de perçage, comme des traits de peinture ou autre, des gabarits, des trous de repérages... Ces repères constituent des éléments de repérage.

Dans ce cas, les moyens de contrôle et d'analyse 40 sont aptes, lorsque le dispositif est dans la position d'approche, à détecter la présence de tels éléments de repérage à la surface de la structure à travailler, d'analyser leur position dans des images captées successivement par la caméra, et d'en déduire la position du dispositif multitâche vis-à-vis des éléments de repérage et donc de la structure à travailler.

La position relative du dispositif vis-à-vis de la structure à travailler est ainsi prise en compte pour piloter les moyens de manutention afin de placer le dispositif multi-tâche convenablement par rapport à la structure à travailler.

Plus précisément, pour réaliser une opération avec précision, il est souhaité de placer l'axe de la broche convenablement vis-à-vis des éléments de repérage. Les moyens de contrôle et d'analyse permettent donc non seulement de déduire la position du dispositif multitâche vis-à-vis de la structure à travailler mais aussi de repérer plus particulièrement la position de l'axe de la broche par rapport à la structure à travailler. Si cette position n'est pas correcte et présente un écart inacceptable par rapport à la position souhaitée, les moyens de contrôle pilotent les moyens de manutention pour corriger cette localisation en déplaçant le dispositif dans une direction parallèle à la surface jusqu'à ce que l'axe de la broche soit convenablement positionné par rapport à la structure à travailler.

### Détection d'un déplacement non souhaité du dispositif par rapport à la structure à travailler

Pour solidariser à une structure à travailler un dispositif selon l'invention comprenant des ventouses 51, le dispositif est approché de la surface de la structure à travailler puis les ventouses 51 sont appliquées contre cette surface avant d'y faire le vide. Dans le cas où un élément presseur 6 est mis en œuvre, l'élément presseur 6 est ensuite plaqué contre la surface de la structure à travailler. Ainsi s'achève la solidarisation du dispositif à la structure à travailler. Cette solidarisation vise à maintenir de manière précise la position du dispositif par rapport à la structure à travailler.

Au cours de cette phase de solidarisation, et en particulier pendant la mise sous vide des ventouses 51 et l'application de l'élément presseur 6 contre la surface de la structure à travailler, il convient donc, pour des raisons de précision et de qualité, que le dispositif reste immobile par rapport à la structure à travailler. Dans ce dessein, les moyens de contrôle et d'analyse 40 sont aptes à détecter un déplacement non souhaité du dispositif par rapport à la surface de la structure à travailler lorsque le dispositif est en cours de solidarisation à la surface et/ou de positionnement par rapport à la surface de la structure à travailler par les moyens de solidarisation et/ou de positionnement.

Préférentiellement, les moyens de contrôle et d'analyse 40 sont aptes à détecter un déplacement non souhaité du dispositif essentiellement parallèlement à la surface de la structure à travailler.

La surface de la structure à travailler peut présenter certaines hétérogénéités visuelles comme des aspérités, des tâches, la trame du matériau ou autre. Ces hétérogénéités visuelles involontaires constituent des points singuliers à la surface de la structure à travailler.

Selon un mode de réalisation particulier, les moyens de contrôle et d'analyse 40 sont aptes à repérer de tels points singuliers à la surface de la structure à travailler et à surveiller leur déplacement dans des images successives captées par la caméra 83 et d'en déduire un éventuel déplacement non souhaité du dispositif par rapport à la surface de la structure à travailler. En d'autres termes, les moyens de contrôle 40 pilotent la caméra 83 de sorte qu'elle capte successivement des images de la surface de la structure à travailler au cours de la solidarisation du dispositif à la structure à travailler. Les moyens d'analyse 40 sont capables de comparer les images successives captées au cours de la solidarisation, d'y déceler ou non des déplacements de points singuliers et d'en déduire si, au cours de la solidarisation du dispositif, celui-ci se déplace ou non par rapport à la structure à travailler.

Alternativement ou en complément, les éléments de repérage situés à la surface de la structure à travailler peuvent également être utilisés pour détecter un éventuel déplacement non souhaité du dispositif par rapport à la surface au cours de sa solidarisation à la structure à travailler.

Dans ces deux variantes, et lorsque le dispositif ne comprend pas de moyen de solidarisation à la structure à travailler mais seulement des moyens de positionnement, les moyens de contrôle et d'analyse 40 peuvent néanmoins détecter un éventuel déplacement non souhaité du dispositif par rapport à la structure à travailler notamment lorsqu'un élément presseur est appliqué contre la surface et/ou au cours de la réalisation d'une opération.

### Contrôle de l'aspect d'un trou ou d'une fraisure

Dans un mode de réalisation, les moyens de contrôle et d'analyse 40 sont aptes à contrôler l'aspect d'un trou ou d'une fraisure réalisée au moyen d'un module de perçage et à vérifier sa conformité en relation avec des critères visuels de qualité préétablis.

En d'autres termes, après qu'une opération de perçage et/ou de fraisurage a été réalisée, les moyens de contrôle 40 pilotent la caméra 83 de sorte qu'elle capte au moins une image du trou et/ou de la fraisure pratiqué(s) dans la structure à travailler. Les moyens d'analyse 40 sont capables de comparer cette au moins une image à au moins une image de référence représentative d'un trou et/ou fraisurage présentant un aspect correspondant à un niveau de qualité attendu, et à en déduire si le trou et/ou fraisurage pratiqués sont conformes. Afin de contrôler l'aspect d'un trou et/ou fraisurage sur plusieurs niveaux, les moyens de contrôle peuvent être aptes à commander le déplacement de la caméra suivant l'axe de la broche unique pour déplacer son plan de netteté au moins en partie le long de l'axe du trou.

### Contrôle de l'aspect d'une corolle de mastic débordant de la tête d'un rivet

Un dispositif selon l'invention peut être mis en œuvre pour réaliser la pose d'un rivet dans un trou ménagé dans la structure à travailler. Un rivet est généralement enduit d'un mastic d'étanchéité avant d'être posé. L'enduction peut par exemple consister à déposer un cordon hélicoïdal ou des cordons parallèles de mastic sur le corps du rivet et une corolle de mastic au niveau de la jonction entre le corps et la tête du rivet.

Ainsi, selon un mode de réalisation, les moyens de contrôle et d'analyse 40 sont aptes à contrôler l'aspect d'une corolle de mastic débordant latéralement de la tête d'un rivet posé au moyen d'un module de pose de rivet et à vérifier sa bonne continuité autour de la tête du rivet attestant de sa conformité.

En d'autres termes, après qu'une opération de pose d'un rivet enduit d'au moins une corolle de mastic a été réalisée, les moyens de contrôle 40 pilotent la caméra 83 de sorte qu'elle capte au moins une image de la tête du rivet posé dans la structure à travailler. Les moyens d'analyse sont capables de comparer cette au moins une image à au moins une image de référence représentative d'une corolle débordant convenablement de manière uniforme et continue autour de la tête d'un rivet, et à en déduire si l'étanchéité au niveau de la tête du rivet est on non conforme.

### Contrôle de l'orthogonalité de la broche vis-à-vis de la structure à travailler

Afin de réaliser de manière optimale les différentes tâches réalisables avec un dispositif selon l'invention, il est préférable de pouvoir contrôler, préalablement à la réalisation d'une tâche, que la broche est bien orthogonale à la surface de la structure à travailler.

Ainsi, dans un mode de réalisation, le dispositif comprend des moyens de contrôle de l'orthogonalité de la broche vis-à-vis de la surface de la structure à travailler.

Les moyens de contrôle de l'orthogonalité comprennent préférentiellement des moyens de projection sur la surface d'un motif prédéterminé. Ces moyens de projection comprennent préférentiellement deux ou trois lasers 11, solidarisés au bâti 2, et aptes à projeter leur rayon sur la structure dans la zone du trou à réaliser.

Les moyens de contrôle et d'analyse 40 sont aptes à capter au moins une image du motif projeté par les moyens de projection à la surface de la structure à travailler et analyser le motif pour en déduire le cas échéant un défaut de normalité de la broche unique 7 par rapport à la surface.

Dans le cas où un défaut d'orthogonalité est détecté, le contrôleur 40 du dispositif pilote les moyens de manutention pour corriger l'orthogonalité jusqu'à obtenir que l'axe de la broche 7 soit orthogonal à la surface de la structure à travailler.

### 6.2. Fonctionnement

Pour réaliser une tâche sur une structure à travailler, les moyens de manutention sont dans un premier temps mis en œuvre pour déplacer le dispositif multi-tâches à l'endroit de la structure où la tâche doit être réalisée.

Le dispositif multi-tâche est placé dans sa position d'approche dans laquelle il s'étend à une certaine distance de la surface de la structure à traiter.

La caméra est déplacée dans sa position intermédiaire et appareillée à la broche.

La broche 17 est déplacée suivant son axe de manière à placer la caméra dans sa position de mise au point en déplaçant l'élément tubulaire interne 82.

Pour que la broche puisse placer la caméra dans une position de mise au point adéquate, les moyens de contrôle doivent calculer le déplacement que la broche doit communiquer à l'élément tubulaire interne 82 supportant la caméra depuis sa position intermédiaire.

Pour cela les moyens de contrôle prennent en compte :
- la distance entre le plan de netteté de la caméra et une surface de référence de l'élément tubulaire interne 82 en position rétractée. Cette distance est prédéterminée et dépend de la caméra et de son intégration dans le module.
- la distance entre la surface de la structure et la même surface de référence de l'élément tubulaire 82 lorsque l'élément tubulaire interne 82 en position rétractée. Cette distance peut être variable suivant si l'effecteur est en position d'approche ou s'il est accosté sur la structure ou encore si l'image devant être captée est sur la surface ou dans un trou.

En conséquence les moyens de contrôle de l'effecteur calculent le déplacement à communiquer au module comme étant la différence entre les deux distances précédentes.

Les moyens de contrôle et d'analyse 40 utilisent la caméra 83 pour capter des images de la surface à travailler et détecter dans ces images les éléments de repérage pour piloter les moyens de manutention afin d'assurer un positionnement convenable du dispositif par rapport à la structure à travailler, et en particulier pour placer l'axe de la broche convenablement par rapport à la structure à travailler.

Les lasers 11 projettent ensuite sur la surface de la structure à travailler un motif prédéterminé et les moyens de contrôle et d'analyse 40 pilotent la caméra 83 pour qu'elle capture au moins une image du motif projeté. Les moyens d'analyse analysent la ou les images capturées par la caméra et en déduisent si l'axe de la broche est orthogonal à la surface. Dans le cas contraire, les moyens de contrôlent agissent sur les moyens de manutentions pour corriger l'orthogonalité de la broche jusqu'à ce que son axe soit orthogonal à la surface.

Une fois que la position du dispositif (en particulier de l'axe de la broche) et l'orthogonalité de la broche sont corrects, le dispositif est déplacé dans sa position d'accostage suivant une direction normale à la surface.

Les moyens de solidarisation, par exemple les ventouses, sont le cas échéant activés pour solidariser le bâti à la structure à travailler.

Au cours de la solidarisation, l'élément presseur est le cas échéant plaqué contre la surface de la structure à travailler.

Pour permettre le contrôle de l'absence de glissement de l'effecteur par rapport à la surface durant la solidarisation, le module caméra est déplacé par la broche dans une nouvelle position de mise au point sur la surface.

Au cours de cette solidarisation, les moyens de contrôle et d'analyse vérifient si le dispositif se déplace par rapport à la surface de la structure à travailler en déterminant, à partir d'une comparaison des images captées par la caméra pendant la solidarisation, si des points singuliers de la surface à travailler se déplacent d'une image à une autre. Dans l'affirmative, les moyens de solidarisation sont désactivés et les moyens de manutention sont mis en œuvre pour corriger la position du dispositif avant de procéder de nouveau à la solidarisation du dispositif à la structure à travailler.

Si aucun moyen de solidarisation n'est mis en œuvre, le maintien en position du bâti par rapport à la surface sera réalisé par les moyens de manutention. Dans ce cas, les moyens de contrôle et d'analyse vérifieront au cours de la réalisation de chaque tâche si le dispositif glisse par rapport à la structure à travailler.

Lorsque le dispositif est convenablement positionné et/ou solidarisé, la caméra est placée dans sa position intermédiaire avant d'être désappareillée de la broche puis placée dans sa position de rangement.

Le module correspondant à l'opération que l'on souhaite réaliser est placé dans l'axe de la broche puis appareillé à celle-ci.

La broche est ensuite déplacée pour réaliser l'opération désirée, par exemple un perçage et/ou fraisurage, la pose d'un rivet enduit ou non, la pose d'une fixation temporaire...

Une fois que l'opération est réalisée, la broche est désappareillée du module fonctionnel puis le module fonctionnel est déplacé pour ne plus se situer dans l'axe de la broche.

La caméra est déplacée dans sa position intermédiaire avant d'être appareillée avec la broche.

Les moyens de contrôle peuvent ensuite déplacer la caméra dans sa position de mise au point et les moyens d'analyse contrôlent la qualité de l'opération réalisée comme par exemple la qualité d'un trou et/ou d'une fraisure ou la qualité de l'étanchéité au niveau de la tête d'un rivet. L'information selon laquelle l'opération réalisée est conforme ou non est enregistrée dans le contrôleur.

D'autres tâches peuvent ensuite être réalisées au même endroit (par exemple la mise en place d'un rivet dans un trou) ou à un autre endroit de la structure à travailler.

## Revendications

1. Dispositif multi-tâches (1) comprenant :
- un bâti (2) ;
- des moyens de fixation (3) dudit bâti (2) à des moyens de manutention motorisés aptes à déplacer au moins en partie ledit dispositif (1) dans l'espace par rapport à une structure à travailler ;
- des moyens de positionnement et/ou solidarisation (5) dudit dispositif (1) à ladite structure à travailler, la distance entre ledit dispositif (1) et la surface de ladite structure à travailler pouvant varier entre une position d'approche et une position d'accostage ;
- au moins deux modules fonctionnels, chacun desdits modules fonctionnels comprenant au moins un organe mobile apte à permettre la réalisation d'une tâche donnée sur ladite structure à travailler ;
- une unique broche d'entrainement (7) mobile en rotation et/ou en translation suivant un même axe (51) et apte à coopérer individuellement avec lesdits organes mobiles pour les animer d'un mouvement de rotation et/ou de translation permettant la réalisation de leur tâche donnée ;
- une caméra (83) ayant une profondeur de champ, ladite caméra (83) étant montée mobile entre au moins :
- une position de rangement dans laquelle elle ne s'étend pas dans l'axe (51) de ladite broche unique (7) ;
- une position de intermédiaire dans laquelle elle s'étend dans l'axe (51) de ladite broche unique (7)
ladite broche (7) étant apte à agir sur ladite caméra (83) pour la déplacer dans au moins une position de mise au point dans laquelle ladite surface de ladite structure à travailler se trouve dans la profondeur de champ de ladite caméra (83).

2. Dispositif multi-tâches (1) selon la revendication 1 comprenant des moyens d'appareillage de ladite broche unique (7) avec ladite caméra (83), lesdits moyens d'appareillage permettant de lier en translation ladite broche unique (7) avec ladite caméra (83) de manière telle que ladite caméra (83) est susceptible d'être déplacée entre ladite position intermédiaire et ladite au moins une position de mise au point le long dudit axe (51).

3. Dispositif multi-tâches (1) selon la revendication 1 ou 2 dans lequel ladite caméra (83) est montée mobile en translation selon un axe orthogonal audit axe (51) de déplacement de ladite broche unique (7) entre ladite position de rangement et ladite position intermédiaire.

4. Dispositif multi-tâches (1) selon la revendication 3 comprenant des moyens de guidage et d'entrainement en translation (9) de ladite caméra (83) entre ses positions de rangement et intermédiaire.

5. Dispositif (1) selon la revendication 4 dans lequel lesdits moyens de guidage en translation (9) comprennent une platine porte-caméra (91) liée au bâti (2) par une liaison glissière d'axe orthogonal à l'axe (51) de ladite broche unique (7).

6. Dispositif multi-tâches (1) selon la revendication 5 dans lequel ladite platine (91) est traversée par une lumière permettant le passage de ladite broche unique (7) lorsque la caméra (83) est en position de rangement.

7. Dispositif multi-tâches (1) selon l'une quelconque des revendications 1 à 6 comprenant des moyens (40) de contrôle de ladite caméra (83) et d'analyse des images captées par ladite caméra (83).

8. Dispositif multi-tâches (1) selon la revendication 7 dans lequel lesdits moyens de contrôle et d'analyse (40) sont aptes à détecter un déplacement non souhaité dudit dispositif (1) par rapport à ladite surface lorsque ledit dispositif (1) est en cours de solidarisation à ladite surface par lesdits moyens de solidarisation (5).

9. Dispositif multi-tâches (1) selon la revendication 8 dans lequel le déplacement non souhaité dudit dispositif (1) par rapport à ladite surface susceptible d'être détecté par lesdits moyens de contrôle et d'analyse (40) est un déplacement essentiellement parallèle à ladite surface.

10. Dispositif multi-tâches (1) selon la revendication 8 ou 9 dans lequel lesdits moyens de contrôle et d'analyse (40) sont aptes à repérer des points singuliers à la surface de ladite structure à travailler et à surveiller leur déplacement dans des images successives captées par ladite caméra (83) et d'en déduire un déplacement non souhaité dudit dispositif (1) par rapport à ladite surface de ladite structure à travailler.

11. Dispositif multi-tâches (1) selon l'une quelconque des revendications 7 à 9 dans lequel lesdits moyens de contrôle et d'analyse (40) sont aptes à détecter des éléments de repérage ménagés sur ladite surface et à déduire, de leur position dans des images captées par ladite caméra (83), la position dudit dispositif multitâche (1) vis-à-vis desdits éléments de repérage.

12. Dispositif multi-tâches (1) selon l'une quelconque des revendications 1 à 11 dans lequel lesdits modules fonctionnels appartiennent au groupe comprenant au moins :
- les modules de perçage ;
- les modules de pose de rivets enduit ou non de mastic ;
- les modules de pose de fixations temporaires.

13. Dispositif multi-tâches (1) selon l'une quelconque des revendications 7 à 11 et selon la revendication 12 dans lequel lesdits moyens de contrôle et d'analyse (40) sont aptes à contrôler l'aspect d'un trou ou d'une fraisure réalisée au moyen d'un module de perçage et à vérifier sa conformité à des critères visuels de qualité préétablis.

14. Dispositif multi-tâches (1) selon l'une quelconque des revendications 7 à 13 et selon la revendication 12 dans lequel lesdits moyens de contrôle et d'analyse (40) sont aptes à contrôler l'aspect d'une corolle de mastic débordant latéralement de la tête d'un rivet posé au moyen d'un module de pose de rivet et à vérifier sa bonne continuité autour de la tête du rivet attestant de sa conformité.

15. Dispositif multi-tâches (1) selon l'une quelconque des revendications 1 à 14 comprenant des moyens de projection sur ladite surface d'un motif prédéterminé, lesdits moyens de contrôle et d'analyse (40) étant aptes à capter et analyser ledit motif et à en déduire un défaut de normalité de ladite broche unique (7) par rapport à ladite surface.

16. Dispositif multi-tâches (1) selon l'une quelconque des revendications 1 à 15 comprenant des moyens de solidarisation dudit dispositif (1) à des moyens de manutention motorisés aptes à déplacer au moins en partie ledit dispositif multitâche (1) dans l'espace par rapport à ladite surface entre au moins une position d'approche dans laquelle ledit dispositif (1) est distant de ladite surface une position d'accostage dans laquelle ledit dispositif (1) est en applique contre ladite surface.

17. Dispositif multi-tâches (1) selon la revendication 16 et l'une quelconque des revendications 8 à 11 ou 13 à 15, dans lequel lesdits moyens de contrôle et d'analyse (40) sont aptes, lorsque ledit dispositif (1) est dans ladite position d'accostage, à contrôler l'aspect d'un trou ou d'une fraisure ou l'aspect d'une corolle de mastic débordant latéralement de la tête d'un rivet ou le déplacement non souhaité dudit dispositif (1) par rapport à ladite surface.

18. Dispositif multi-tâches (1) selon la revendication 16 et l'une quelconque des revendications 8 à 11 ou 13 à 14 dans lequel lesdits moyens de contrôle et d'analyse (40) sont aptes, lorsque ledit dispositif (1) est dans ladite position d'approche, à détecter des éléments de repérage ménagés sur ladite surface et à déduire de leur position dans des image captées par ladite caméra (83), la position du dispositif multitâche (1) vis-à-vis de ces éléments de repérage ou à détecter un défaut de normalité de ladite broche unique (7) par rapport à ladite surface.

19. Procédé de réalisation d'une tâche au moyen d'un dispositif multi-tâche (1) selon l'une quelconque des revendications 1 à 18, ledit procédé comprend une étape de déplacement de ladite caméra (83), au moyen de ladite broche (7), dans au moins une position de mise au point dans laquelle ladite surface de ladite structure à travailler se trouve dans la profondeur de champ de ladite caméra (83).

## Patentansprüche

1. Multi-Tasking-Vorrichtung (1), umfassend:
- ein Gestell (2);
- Mittel zum Befestigen (3) des Gestells (2) an motorisierten Handhabungsmitteln, die dazu geeignet sind, die Vorrichtung (1) mindestens teilweise im Raum in Bezug auf eine zu bearbeitende Struktur zu bewegen;
- Mittel zum Positionieren und/oder Sichern (5) der Vorrichtung (1) an der zu bearbeitenden Struktur, wobei der Abstand zwischen der Vorrichtung (1) und der Oberfläche der zu bearbeitenden Struktur zwischen einer Annäherungsposition und einer Andockposition variieren kann;
- mindestens zwei Funktionsmodule, wobei jedes der Funktionsmodule mindestens ein bewegliches Element umfasst, das dazu geeignet ist, das Durchführen einer bestimmten Aufgabe an der zu bearbeitenden Struktur zu ermöglichen;
- einen einzelnen Stift Antriebs (7), der sich in Drehung und/oder Translation entlang derselben Achse (51) bewegen kann und dazu geeignet ist, einzeln mit den beweglichen Elementen zusammenzuwirken, um sie durch eine Dreh- und/oder Translationsbewegung anzutreiben, die das Ausführen ihrer bestimmten Aufgabe ermöglicht;
- eine Kamera (83) mit einer Tiefenschärfe, wobei die Kamera (83) zwischen mindestens Folgendem beweglich montiert ist:
- einer Verstauposition, in der sie sich nicht in der Achse (51) des einzelnen Stifts (7) erstreckt;
- einer Zwischenposition, in der sie sich in der Achse des einzelnen Stifts (7) erstreckt, wobei der Stift (7) dazu geeignet ist, auf die Kamera (83) einzuwirken, um sie in mindestens eine Fokusposition zu bewegen, in der sich die Oberfläche der zu bearbeitenden Struktur in der Tiefenschärfe der Kamera (83) befindet.

2. Multi-Tasking-Vorrichtung (1) nach Anspruch 1, umfassend Mittel zum zusammenstellendes einzelnen Stifts (7) mit der Kamera (83), wobei die Mittel zum zusammenstellen es ermöglichen, den einzelnen Stift (7) mit der Kamera (83) translatorisch so zu verbinden, dass die Kamera (83) zwischen der Zwischenposition und der mindestens einen Fokusposition entlang der Achse (51) bewegt werden kann.

3. Multi-Tasking-Vorrichtung (1) nach Anspruch 1 oder 2, wobei die Kamera (83) in Translation entlang einer Achse, die orthogonal zur Achse (51) zur Bewegungs des einzelnen Stifts (7) verläuft, zwischen der Verstauposition und der Zwischenposition beweglich montiert ist.

4. Multi-Tasking-Vorrichtung (1) nach Anspruch 3, umfassend Mittel zum translatorischen Führen und Antreiben (9) der Kamera (83) zwischen ihrer Verstau- und Zwischenposition.

5. Vorrichtung (1) nach Anspruch 4, wobei die Mittel zum translatorischen Führen (9) eine Platte (91) zur Kameraträger umfassen, die über eine Gleitverbindung einer Achse, die orthogonal zur Achse (51) des einzelnen Stifts (7) verläuft, mit dem Gestell (2) verbunden ist.

6. Multi-Tasking-Vorrichtung (1) nach Anspruch 5, wobei die Platte (91) mit einem Loch durchbohrt ist, das den Durchgang des einzelnen Stifts (7) ermöglicht, wenn sich die Kamera (83) in der Verstauposition befindet.

7. Multi-Tasking-Vorrichtung (1) nach einem der Ansprüche 1 bis 6, umfassend Mittel (40) zum Steuern der Kamera (83) und zum Analysieren der von der Kamera (83) aufgenommenen Bilder.

8. Multi-Tasking-Vorrichtung (1) nach Anspruch 7, wobei die Mittel zum Steuern und zum Analysieren (40) dazu geeignet sind, eine unerwünschte Bewegung der Vorrichtung (1) in Bezug auf die Oberfläche zu erkennen, wenn die Vorrichtung (1) durch die Mittel zum Sichern (5) an der Oberfläche gesichert wird.

9. Multi-Tasking-Vorrichtung (1) nach Anspruch 8, wobei die unerwünschte Bewegung der Vorrichtung (1) in Bezug auf die Oberfläche, die von den die Mittel zum Steuern und zum Analysieren (40) erkannt werden kann, eine im Wesentlichen zu der Oberfläche parallele Bewegung ist.

10. Multi-Tasking-Vorrichtung (1) nach Anspruch 8 oder 9, wobei die Mittel zum Steuern und zum Analysieren (40) dazu geeignet sind, singulärer Punkte auf der Oberfläche der zu bearbeitenden Struktur zu ausfindig machen und ihre Bewegung in aufeinanderfolgenden, von der Kamera (83) aufgenommenen Bildern zu überwachen und daraus eine unerwünschte Bewegung der Vorrichtung (1) in Bezug auf die Oberfläche der zu bearbeitenden Struktur abzuleiten.

11. Multi-Tasking-Vorrichtung (1) nach einem der Ansprüche 7 bis 9, wobei die Mittel zum Steuern und zum Analysieren (40) dazu geeignet sind, an der Oberfläche angebrachte Markierungselemente zu erkennen und aus ihrer Position in den von der Kamera (83) aufgenommenen Bildern die Position der Multi-Tasking-Vorrichtung (1) gegenüber den Markierungselementen abzuleiten.

12. Multi-Tasking-Vorrichtung (1) nach einem der Ansprüche 1 bis 11, wobei die Funktionsmodule zur Gruppe gehören, die mindestens Folgendes umfasst:
- die Bohrmodule;
- die Nietsetzmodule mit oder ohne Spachtelmasse;
- die Module zum Anbringen von temporären Befestigungen.

13. Multi-Tasking-Vorrichtung (1) nach einem der Ansprüche 7 bis 11 und nach Anspruch 12, wobei die Mittel zum Steuern und zum Analysieren (40) dazu geeignet sind, das Aussehen einer Bohrung oder einer Fräsung, die mittels eines Bohrmoduls hergestellt wurde, zu steuern und dessen Übereinstimmung mit vorab festgelegten visuellen Qualitätskriterien zu überprüfen.

14. Multi-Tasking-Vorrichtung (1) nach einem der Ansprüche 7 bis 13 und nach Anspruch 12, wobei die Mittel zum Steuern und zum Analysieren (40) dazu geeignet sind, das Aussehen einer seitlich aus dem Kopf eines mittels eines Nietsetzmoduls angebrachten Niets herausragenden Spachtelmasserolle zu kontrollieren und ihre gute Kontinuität um den Kopf des Niets herum zu überprüfen, die dessen Übereinstimmung belegt.

15. Multi-Tasking-Vorrichtung (1) nach einem der Ansprüche 1 bis 14, umfassend Mittel zum Projizieren eines vorbestimmten Musters auf die Oberfläche, wobei die Mittel zum Steuern und zum Analysieren (40) dazu geeignet sind, das Muster zu erfassen und zu analysieren und daraus einen Normalitätsfehler des einzelnen Stifts (7) in Bezug auf die Oberfläche abzuleiten.

16. Multi-Tasking-Vorrichtung (1) nach einem der Ansprüche 1 bis 15, umfassend die Mittel zum Sichern der Vorrichtung (1) an motorisierten Handhabungsmitteln, die dazu geeignet sind, die Multi-Tasking-Vorrichtung (1) mindestens teilweise im Raum in Bezug auf die Oberfläche zwischen mindestens einer Annäherungsposition, in der die Vorrichtung (1) von der Oberfläche entfernt ist, und einer Andockposition, in der die Vorrichtung (1) an der Oberfläche anliegt, zu bewegen.

17. Multi-Tasking-Vorrichtung (1) nach Anspruch 16 und einem der Ansprüche 8 bis 11 oder 13 bis 15, wobei die Mittel zum Steuern und zum Analysieren (40), wenn sich die Vorrichtung (1) in der Andockposition befindet, dazu geeignet sind, das Aussehen einer Bohrung oder einer Fräsung oder das Aussehen einer seitlich aus dem Kopf eines Niets herausragenden Spachtelmasserolle oder die unerwünschte Bewegung der Vorrichtung (1) in Bezug auf die Oberfläche zu steuern.

18. Multi-Tasking-Vorrichtung (1) nach Anspruch 16 und einem der Ansprüche 8 bis 11 oder 13 bis 14, wobei die Mittel zum Steuern und zum Analysieren (40) dazu geeignet sind, wenn sich die Vorrichtung (1) in der Annäherungsposition befindet, auf der Oberfläche angebrachte Markierungselemente zu erkennen und aus ihrer Position in den von der Kamera (83) aufgenommenen Bildern die Position der Multi-Tasking-Vorrichtung (1) gegenüber den Markierungselementen abzuleiten oder einen Normalitätsfehler des einzelnen Stifts (7) in Bezug auf die Oberfläche zu erkennen.

19. Verfahren zum Ausführen einer Aufgabe mittels einer Multi-Tasking-Vorrichtung (1) nach einem der Ansprüche 1 bis 18, wobei das Verfahren einen Schritt des Bewegens der Kamera (83) mittels des Stifts (7) in mindestens eine Fokusposition umfasst, in der sich die Oberfläche der zu bearbeitenden Struktur in der Tiefenschärfe der Kamera (83) befindet.

## Claims

1. A multi-task device (1) comprising:
- a frame (2);
- means for fastening (3) said frame (2) to motor-drive handling means able to at least partly move said device (1) in space in relation to a structure to be worked;
- means for positioning and/or securing (5) said device (1) to said structure to be worked, the distance between said device (1) and the surface of said structure to be worked being able to vary between an approach position and a docking position;
- at least two functional modules, each of said functional modules comprising at least one movable member able to make it possible to perform a given task on said structure to be worked;
- one single drive spindle (7) movable in rotation and/or in translation according to the same axis (51) and able to cooperate individually with said movable members in order to drive them in a rotational and/or translational movement enabling the completion of their given task;
- a camera (83) having a depth of field, said camera (83) being movably mounted between at least:
- a stowage position in which it does not extend along the axis (51) of said single spindle (7);
- an intermediate position in which it extends along the axis of said single spindle (7), said spindle (7) being able to act on said camera (83) to move it into at least one focusing position in which said surface of said structure to be worked is in the depth of field of said camera (83).

2. Multi-task device (1) according to claim 1, comprising means for pairing said single spindle (7) with said camera (83), said means for pairing allowing translationally connecting said single spindle (7) with said camera (83) such that said camera (83) is capable of being moved between said intermediate position and said at least one focusing position along said axis (51).

3. Multi-task device (1) according to claim 1 or 2, wherein said camera (83) is mounted movable in translation along an axis orthogonal to said axis (51) of movement of said single spindle (7) between said stowage position and said intermediate position.

4. Multi-task device (1) according to claim 3, comprising means for translationally guiding and driving (9) said camera (83) between its stowage and intermediate positions.

5. Device (1) according to claim 4, wherein said means for translationally guiding (9) comprise a camera support plate (91) connected to the frame (2) by a slide joint having an axis orthogonal to the axis (51) of said single spindle (7).

6. Multi-task device (1) according to claim 5, wherein said plate (91) is crossed by a hole allowing passage of said single spindle (7) when the camera (83) is in the stowage position.

7. Multi-task device (1) according to any of claims 1 to 6, comprising means (40) for controlling said camera (83) and for analysing images captured by said camera (83).

8. Multi-task device (1) according to claim 7, wherein said means for controlling and for analysing (40) are able to detect an undesired movement of said device (1) in relation to said surface when said device (1) is being secured to said surface by said means for securing (5).

9. Multi-task device (1) according to claim 8, wherein the undesired movement of said device (1) in relation to said surface likely to be detected by said means for controlling and for analysing (40) is a movement essentially parallel to said surface.

10. Multi-task device (1) according to claim 8 or 9, wherein said means for controlling and for analysing (40) are able to identify singular points at the surface of said structure to be worked and to monitor movement thereof in successive images captured by said camera (83) and deduce therefrom an undesired movement of said device (1) in relation to said surface of said structure to be worked.

11. Multi-task device (1) according to any of claims 7 to 9, wherein said means for controlling and analysing (40) are able to detect marking elements arranged on said surface and to deduce, from their position in images captured by said camera (83), the position of said multi-task device (1) relative to said marking elements.

12. Multi-task device (1) according to any of claims 1 to 11, wherein said functional modules belong to the group comprising at least:
- the drilling modules;
- the modules for setting rivets coated or not with mastic;
- the modules for setting temporary fasteners.

13. Multi-task device (1) according to any of claims 7 to 11 and according to claim 12, wherein said means for controlling and analysing (40) are able to control the aspect of a hole or of a countersink made by means of a drilling module and to verify its conformity with pre-established visual quality criteria.

14. Multi-task device (1) according to any of claims 7 to 13 and according to claim 12, wherein said means for controlling and analysing (40) are able to control the aspect of a corolla of mastic protruding laterally from the head of a rivet set by means of a module for setting the rivet and to verify its correct continuity around the head of the rivet certifying its conformity.

15. Multi-task device (1) according to any one of claims 1 to 14, comprising means for projecting a predetermined pattern onto said surface, said means for controlling and analysing (40) being able to capture and analyse said pattern and to deduce therefrom an absence of normality of said single spindle (7) in relation to said surface.

16. Multi-task device (1) according to any of claims 1 to 15, comprising means for securing said device (1) to motor-drive handling means able to at least partly move said multi-task device (1) in space in relation to said surface between at least one approach position in which said device (1) is distant from said surface and a docking position in which said device (1) is pressed against said surface.

17. Multi-task device (1) according to claim 16 and any of claims 8 to 11 or 13 to 15, wherein said means for controlling and analysing (40) are able, when said device (1) is in said docking position, to control the aspect of a hole or of a countersink or the aspect of a corolla of mastic protruding laterally from the head of a rivet or the undesired movement of said device (1) in relation to said surface.

18. Multi-task device (1) according to claim 16 and any of claims 8 to 11 or 13 to 14, wherein said means for controlling and analysing (40) are able, when said device (1) is in said approach position, to detect marking elements arranged on said surface and to deduce from their position in images captured by said camera (83), the position of the multi-task device (1) relative to these marking elements or to detect an absence of normality of said single spindle (7) in relation to said surface.

19. Method for performing a task by means of a multi-task device (1) according to any of claims 1 to 18, said method comprising a step of moving said camera (83), by means of said spindle (7), into at least one focussing position in which said surface of said structure to be worked is situated in the field of depth of said camera (83).
